# EUROPÄISCHE PATENTSCHRIFT

(11) **EP 1 554 080 B1**
(45) Veröffentlichungstag und Bekanntmachung des Hinweises auf die Patenterteilung: **13.08.2008**
(21) Anmeldenummer: 03758023.0
(22) Anmeldetag: 20.10.2003
(51) Int. Cl.: B23Q 17/22, B23Q 17/24

(54) **WERKZEUGHALTEVORRICHTUNG UND VERFAHREN ZUM POSITIONIEREN EINES WERKZEUGS**
TOOL HOLDING DEVICE AND METHOD FOR POSITIONING A TOOL
DISPOSITIF PORTE-OUTIL ET PROCEDE POUR POSITIONNER UN OUTIL

(30) Priorität: 11.12.2002 DE 10258055
(43) Veröffentlichungstag der Anmeldung: 20.07.2005
(73) Patentinhaber: E. Zoller Gmbh & Co. KG Einstell-und Messgeräte, 71691 Freiberg/Neckar (DE)
(72) Erfinder: BUTTAU, Dieter, 74379 Ingersheim (DE); THIEL, Felix, 74076 Heilbronn (DE)
(74) Vertreter: Daub, Thomas
(86) Internationale Anmeldenummer: PCT/EP2003/011592
(87) Internationale Veröffentlichungsnummer: WO 2004/052591

(56) Entgegenhaltungen:
- US-A- 3 504 442
- US-A1- 2001 042 295

## Beschreibung

### Stand der Technik

Die Erfindung betrifft eine Werkzeughaltevorrichtung und ein Verfahren zum Positionieren eines Werkzeugs.

Zum exakten Bearbeiten eines Werkstücks, insbesondere mit einer mehrspindeligen Werkzeugmaschine, ist es sinnvoll, die Bearbeitungswerkzeuge jeweils exakt positioniert in den Werkzeugfuttern der Spindeln einzuspannen. Zur exakten Positionierung eines Werkzeugs in einem Werkzeugfutter ist aus der EP 1 155 765 A1 ein Verfahren und ein Werkzeugfutter bekannt, bei dem das Werkzeug in einer kleinen Stützöffnung gehalten wird und vor dem Befestigen des Werkzeugs im Werkzeugfutter am Werkzeug Kalibrierungs- oder Vermessungsvorgänge vorgenommen werden können. Hierbei kann das Werkzeug jedoch nur mäßig exakt fluchtend zur Aufnahmeöffnung des Werkzeugfutters gehalten werden, so dass besonders bei langen und/oder spitzkegeligen Werkzeugen die Gefahr einer unexakte-n Werkzeugvermessung besteht.

US-5,311,654-A offenbart eine Vorrichtung mit einem Werkzeug, einem Wekzeugfutter und einer Werkzeughaltevorrichtung, die das Werkzeug an dem Werkzeugfutter erst nach dem Erhitzen des Werkzeugfutters halten kann.

Der Erfindung liegt daher die Aufgabe zugrunde, eine Werkzeughaltevorrichtung und ein Verfahren zum Positionieren eines Werkzeugs in einem Werkzeugfutter anzugeben, mit dem das Werkzeug mit einer hohen Genauigkeit in einem Werkzeugfutter positioniert werden kann.

Diese Aufgabe wird gemäß der Erfindung durch die Merkmale der unabhängigen Patentansprüche gelöst.

### Vorteile der Erfindung

Bezüglich der Werkzeughaltevorrichtung wird eine Werkzeughaltevorrichtung zum Halten eines Werkzeugs an einem Werkzeugfutter vorgeschlagen, wobei die Werkzeughaltevorrichtung einen Werkzeugaufnahmebereich zur zumindest teilweisen Aufnahme des Werkzeugs, einen Verbindungsbereich zur Anordnung am Werkzeugfutter und eine Positionieröffnung umfasst, durch die ein Positioniermittel an das zumindest teilweise im Werkzeugaufnahmebereich angeordnete Werkzeug anlegbar ist. Auf eine Stützöffnung im Werkzeugfutter kann verzichtet werden, wodurch das Werkzeugfutter kompakt gehalten werden kann. Außerdem ist die Werkzeughaltevorrichtung vom Werkzeugfutter trennbar und kann daher, ohne dass in die Gestaltung und die Dimensionierungen des Werkzeugfutters eingegriffen werden müsste, auf das genaue Halten des Werkzeugs relativ zum Werkzeugfutter ausgerichtet werden. Eine nicht exakt mit dem Werkzeugfutter fluchtende Positionierung des Werkzeugs im Werkzeugfutter führt bei einem Vermessen des Werkzeugs an schrägen Schneiden des Werkzeugs zu einer Fehlbestimmung der axialen Länge des Werkzeugs. Dies gilt insbesondere bei sehr langen Werkzeugen. Selbst ein kleiner Schrägstand der Schneide, ein Fehler aus einer manuellen Fokussierung einer optischen Vermessungseinheit oder der Taumel des Werkzeugs gehen unmittelbar in die Messgenauigkeit der axialen Länge ein. Eine Werkzeughaltevorrichtung kann mit einer sehr hohen Genauigkeit fluchtend am Werkzeugfutter angeordnet werden. Sie kann außerdem so an den Schaft eines Werkzeugs angepasst sein, dass das Werkzeug in der Werkzeughaltevorrichtung ebenfalls mit der Achse des Werkzeugfutters fluchtend gehalten ist. Es werden somit beim Vermessen von beispielsweise sehr langen Werkzeugen oder von schrägen charakteristischen Elementen des Werkzeugs, wie beispielsweise eine Schneide, aus radialen Positionierungsungenauigkeiten resultierende Messfehler weitgehend vermieden.

Durch die Anlegbarkeit des Positioniermittels an das Werkzeug kann zusätzlich die Position des Werkzeugs mit hoher Genauigkeit erfasst werden. Die so ermittelte Position des Werkzeugs kann zu einer Positionierung des Positioniermittels in der Weise verwendet werden, dass das Werkzeug bei einer Anlage an das Positioniermittel im Werkzeugfutter in der gewünschten Soll-Position angeordnet ist. Durch die direkte Anlegbarkeit des Positioniermittels ist außerdem gewährleistet, dass beim Messen zum Vorpositionieren und beim Auflegen des Werkzeugs auf das Positioniermittel vor einem Befestigungsvorgang, z.B. durch Einschrumpfen, die identische Anschlagstelle und der identische Anschlag Verwendung findet. Dies ist besonders bei Werkzeugen mit Innenkühlung vorteilhaft, die einen Innenkanal im Werkzeuginneren aufweisen und daher nur schwer per Anschlag zu positionieren sind.

Unter einem Werkzeugfutter wird jede Vorrichtung verstanden, die zur Halterung des Werkzeugs während eines Arbeitsgangs des Werkzeugs an einem Werkstück vorgesehen ist. Insbesondere wird ein Schrumpffutter zum thermischen Einschrumpfen des Werkzeugs darunter verstanden. Der Werkzeugaufnahmebereich dient vorzugsweise zur Aufnahme des Schafts des Werkzeugs. Mit dem Verbindungsbereich wird die Werkzeughaltevorrichtung am Werkzeugfutter angeordnet. Unter einer solchen Anordnung ist ein berührendes Zusammenführen zu verstehen, wie beispielsweise ein Aufeinanderstellen, oder eine formschlüssige oder kraftschlüssige Verbindung. Der Verbindungsbereich kann auch zumindest teilweise im Werkzeugfutter angeordnet sein. Die Positionieröffnung ist zweckmäßigerweise im Verbindungsbereich angeordnet.

Zweckmäßigerweise ist der Werkzeugaufnahmebereich bei im Verbindungsbereich angeordnetem Werkzeugfutter zur mit einer Aufnahmeöffnung des Werkzeugfutters fluchtenden Halterung des Werkzeugs vorgesehen. Das Werkzeug kann auf diese Weise au-ßerhalb des Werkzeugfutters so ausgerichtet gehalten werden, wie es in befestigtem Zustand im Werkzeugfutter gehalten ist. Auf diese Weise kann eine Vermessung des Werkzeugs einfach durchgeführt werden.

Eine einfache Anordnung des Verbindungsbereichs im Werkzeugfutter kann dadurch erreicht werden, dass der Verbindungsbereich einen Schaft zur Anordnung in einer Aufnahmeöffnung des Werkzeugfutters aufweist. Der Schaft kann in das Werkzeugfutter eingesteckt und in der Aufnahmeöffnung zweckmäßigerweise exakt positioniert gehalten werden.

Eine sehr exakte Ausrichtung und zweckmäßigerweise spielfreie Anordnung des Werkzeugs im Werkzeugaufnahmebereich kann erreicht werden, indem im Werkzeugaufnahmebereich ein zur elastischen Verformung vorgesehenes Halteelement angeordnet ist. Ein solches Halteelement kann in besonders einfacher Weise einen O-Ring umfassen, wobei auch andere elastische Mittel denkbar sind, die zum Anliegen am Werkzeug und zum Halten desselben vorgesehen sind. Mit analogem Vorteil ist im Verbindungsbereich ein zur elastischen Verformung vorgesehenes Halteelement angeordnet, wodurch der Verbindungsbereich, der beispielsweise als Schaft ausgebildet ist, genau positioniert und zweckmäßigerweise spielfrei am Werkzeugfutter angeordnet werden kann, worunter auch eine zumindest teilweise Anordnung im Werkzeugfutter zu verstehen ist.

Ein weiterer Vorteil kann erreicht werden, wenn im Werkzeugaufnahmebereich ein beweglich gelagertes Halteelement angeordnet ist. Durch die bewegliche Lagerung des Halteelements kann ein Werkzeug besonders einfach in den beispielsweise als Werkzeugaufnahmeöffnung ausgestalteten Werkzeugaufnahmebereich eingeführt werden und Gleitreibung beim Einführen des Werkzeugs zumindest weitgehend vermieden werden. Mit analogem Vorteil ist das beweglich gelagerte Halteelement im Verbindungsbereich angeordnet, was bezüglich der Lagerung des Verbindungsbereichs am Werkzeugfutter vorteilhaft ist. Das beweglich gelagerte Halteelement kann ein Wälzkörper, insbesondere eine Kugel oder ein Wälzkörperkäfig, insbesondere ein Kugelkäfig, sein.

Vorteilhafterweise ist das Halteelement ein Wälzkörperkäfig, beispielsweise ein Kugelkäfig oder ein Walzkäfig, wobei auch andere Formen der Wälzkörper denkbar sind. Hierdurch kann eine besonders einfache Anordnung des Halteelements im Verbindungsbereich oder im Werkzeugaufnahmebereich erreicht werden.

Eine besonders vorteilhafte Anordnung des Verbindungsbereichs am Werkzeugfutter kann erreicht werden, wenn der Verbindungsbereich eine Innenwand zur Anordnung um eine Außenwand des Werkzeugfutters aufweist. Die Werkzeughaltevorrichtung kann mit dem Verbindungsbereich auf das Werkzeugfutter aufgesteckt werden, wobei bei einer zweckmäßigerweise konischen Ausführung der Außenwand des Werkzeugfutters ein Verkanten des Verbindungsbereichs an der Außenwand vermieden werden kann. Die Werkzeughaltevorrichtung kann auf diese Weise spielfrei und somit exakt positioniert am Werkzeugfutter angeordnet werden. Dieser Vorteil wird besonders gut erreicht, wenn die Innenwand konisch ausgeführt ist.

Bezüglich des Verfahrens wird ein Verfahren zum Positionieren eines Werkzeugs in einem Werkzeugfutter vorgeschlagen, bei dem eine Werkzeughaltevorrichtung am Werkzeugfutter angeordnet und das Werkzeug von der Werkzeughaltevorrichtung gehalten wird und ein charakteristisches Element des Werkzeugs zur Positionierung eines Positioniermittels abgetastet wird, wobei mit Hilfe des Positioniermittels eine Kraft durch eine Positionieröffnung in der Werkzeughaltevorrichtung hindurch auf das Werkzeug aufgebracht wird. Das Werkzeug kann, wie oben beschrieben, durch die Werkzeughaltevorrichtung sehr genau in einer gewünschten Ausrichtung am Werkzeugfutter gehalten und das Werkzeug so vermessen werden. Durch das Aufbringen der Kraft auf das Werkzeug, beispielsweise durch ein direktes oder indirektes Anlegen des Positioniermittels am Werkzeug, kann das Positioniermittel ohne Eichung oder Kalibrierung anschließend in eine Position gebracht werden, in der das an das Positioniermittel angelegte Werkzeug sehr exakt in einer gewünschten Stellung positioniert ist.

Die Werkzeughaltevorrichtung ist am Werkzeugfutter angeordnet, wobei sie hierbei auch teilweise im Werkzeugfutter angeordnet, beispielsweise eingesteckt, sein kann. Das charakteristische Element kann eine Spitze des Werkzeugs oder eine Kante, Schneide, Flanke, Seite, Kontur, Hüllkurve oder ein anderes bei einer Werkstückbearbeitung wichtiges Element des Werkzeugs sein. Das Abtasten des charakteristischen Elements des Werkzeugs kann mechanisch, beispielsweise durch ein Anlegen eines Messelements, oder berührungslos, beispielsweise optisch durch die Aufnahme eines Bildes des Elements, geschehen.

Vorteilhafterweise bleibt die Kraft auf das Werkzeug während des Vermessens des charakteristischen Elements aufrecht erhalten. Es kann auf diese Weise während des Vermessens ein Positionsbezug zwischen dem charakteristischen Element und dem Positioniermittel erhalten bleiben, wodurch eine exakte Positionierung des Werkzeugs im Werkzeugfutter erreicht werden kann.

Ein weiterer Vorteil der Erfindung wird erreicht, indem das Positioniermittel vor dem Vermessen des charakteristischen Elements an das Werkzeug angelegt und das Werkzeug beim Anlegen abgetastet wird. Durch das Anlegen und den dadurch zustande kommenden Kraftfluss kann das Werkzeug ein Stück weit bewegt werden. Diese Bewegung kann durch das Abtasten erfasst und als Trigger zum Starten der Vermessung des charakteristischen Elements verwendet werden. Das Abtasten kann mechanisch oder berührungslos auf optischem Weg geschehen, wobei auch eine elektrische Abtastung, beispielsweise durch eine kapazitive Messung, denkbar ist. Vorzugsweise wird das charakteristische Element abgetastet.

Zweckmäßigerweise wird durch das Anlegen eine Bewegung des Werkzeugs bewirkt und die Bewegung als Trigger zum Stoppen der Bewegung des Positioniermittels verwendet. Hierdurch kann auf einfache Weise das Positioniermittel aus seiner unbekannten Position so lange bewegt werden, bis die Bewegung des Werkzeugs durch den zustande gekommenen Kraftfluss registriert wird. Auch ohne Kenntnis der Position des Positioniermittels kann ein Vermessungsvorgang gestartet und eine exakte Positionierung des Werkzeugs im Werkzeugfutter erreicht werden.

Eine zuverlässig exakte Vermessung des charakteristischen Elements kann erreicht werden, indem das Werkzeug vor dem Vermessen des charakteristischen Elements durch das Positioniermittel in der Werkzeughaltevorrichtung angehoben wird und während des Vermessens angehoben bleibt.

Ein automatisierter und damit kostengünstiger Ablauf des Vermessens des charakteristischen Elements kann erreicht werden, indem eine Vermessungsoptik auf einen vorbestimmten Punkt fokussiert wird, die Vermessungsoptik bei fehlendem oder sichtbarem Werkzeug im Blickfeld der Vermessungsoptik in Axialrichtung eines Werkzeugaufnahmebereichs der Werkzeughaltevorrichtung an das Werkzeug angenähert beziehungsweise vom Werkzeugfutter entfernt wird und nach Erscheinen des charakteristischen Elements im Blickfeld dessen Ist-Position bestimmt und danach die Kraft auf das Werkzeug aufgebracht wird. Durch einen solchen automatischen Suchlauf der Vermessungsoptik, beispielsweise einer Kamera verbunden mit einem Beleuchtungselement, kann ein manuelles Einstellen der Vermessungsoptik auf das charakteristische Element verzichtet werden. Der vorbestimmte Punkt liegt vorzugsweise in Axialrichtung vom charakteristischen Element des Werkzeugs. Der Punkt kann beispielsweise an einer Sichtkante des Schafts des Werkzeugs angeordnet sein und die Vermessungsoptik so bewegt werden, dass das Blickfeld entlang der Sichtkante des Werkzeugs bis zum charakteristischen Element fährt.

Zweckmäßigerweise wird nach dem Aufbringen der Kraft die Ist-Position zur Bestimmung der Soll-Position des Positioniermittels erneut gemessen. Durch die erste Bestimmung der Ist-Position des charakteristischen Elements kann eine Bewegung des Werkzeugs durch ein Anlegen des Positioniermittels am Werkzeug registriert werden, nämlich indem sich das charakteristische Element aus der ersten Ist-Postion herausbewegt. Zur Bestimmung der Soll-Position des Positioniermittels wird die Ist-Position des charakteristischen Elements neu vermessen, um eine exakte Positionierung des Werkzeugs im Werkzeugfutter zu erreichen.

Vorteilhafterweise werden das Werkzeug und die Werkzeughaltevorrichtung nach dem Vermessen voneinander getrennt, und das Werkzeug wird in das Werkzeugfutter eingesetzt. Durch diese Trennung von Werkzeughaltevorrichtung und im Werkzeug befestigtem Werkzeugfutter kann das Werkzeugfutter besonders einfach ausgeführt sein, beispielsweise in Form eines handelsüblichen Standard-Werkzeugfutters.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Werkzeugeinstell- und Messgeräts,
- Fig. 2: einen Schnitt durch ein Werkzeugfutter mit einem Positioniermittel und einer Werkzeughaltevorrichtung,
- Fig. 3: das Werkzeugfutter aus Fig. 2 mit positioniertem Werkzeug,
- Fig. 4: eine alternative Werkzeughaltevorrichtung mit eingestecktem Werkzeug,
- Fig. 5: ein weiteres Werkzeugfutter mit einer aufgesteckten Werkzeughaltevorrichtung in geschnittener Darstellung,
- Fig. 6: die Werkzeughaltevorrichtung aus Fig. 5 mit einem Halteelement beim Prozess des Einführens des Werkzeugs,
- Fig. 7: das in das Halteelement eingeführte Werkzeug und
- Fig. 8: ein Detail des Halteelements aus Fig. 7.

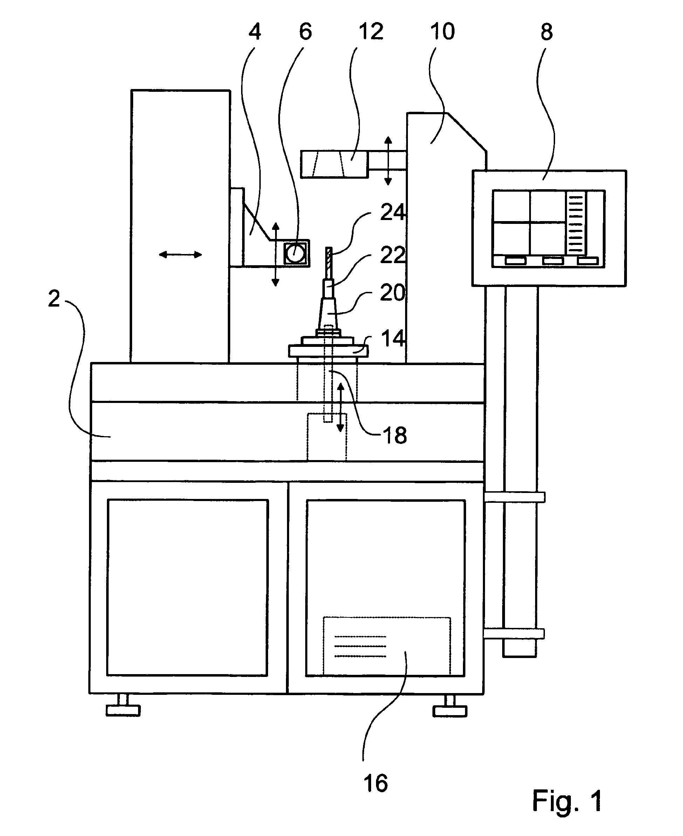

Das in Figur 1 gezeigte Einstell- und Messgerät 2 umfasst einen Optikträger 4, ein Kamerasystem mit einer als Kamera ausgeführten Vermessungsoptik 6, eine Steuereinheit 8, einen Induktionsschlitten 10, eine Induktionsspule 12 und eine Werkzeugaufnahmespindel 14. Außerdem weist das Einstell- und Messgerät 2 eine Auswerteeinheit 16 und ein automatisches Längeneinstell- und Anschlagsystem mit einem Positioniermittel 18 auf. In der Werkzeugaufnahmespindel 14 ist ein Werkzeugfutter 20 befestigt, in das eine Werkzeughaltevorrichtung 22 eingebracht ist. In die Werkzeughaltevorrichtung 22 ist ein als Schaftwerkzeug ausgebildetes Werkzeug 24 eingesteckt. Die erwähnten Elemente sind gemäß den gezeigten Pfeilen verfahrbar.

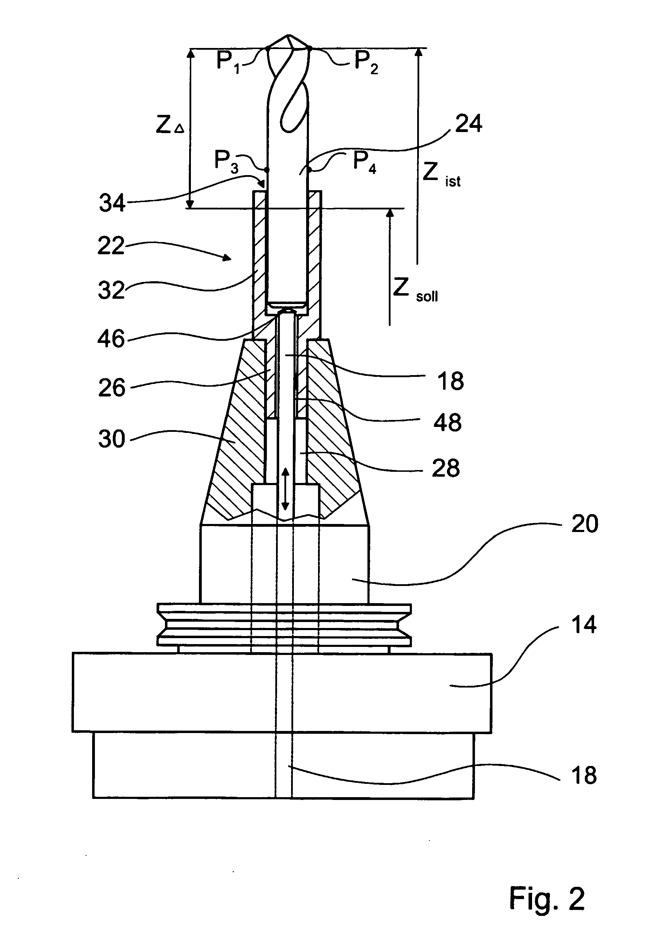

Ein Verfahren zum Befestigen des Werkzeugs 24 im Werkzeugfutter 20 wird im Folgenden anhand der Figuren 1 bis 4 beschrieben. Das Werkzeugfutter 20 wird in die Aufnahmespindel 14 eingesetzt und vorzugsweise dort eingespannt. Danach wird die Werkzeughaltevorrichtung 22 mit einem als Schaft ausgeformten Verbindungsbereich 26 in eine Aufnahmeöffnung 28 des Werkzeugfutters 20 eingesetzt. Der Verbindungsbereich 26 dient zur Anordnung der Werkzeughaltevorrichtung 22 am Werkzeugfutter 20 und ist im Schaft so geschliffen, dass er ohne Erwärmung eines Aufnahmebereichs 30 des Werkzeugfutters 20 gleitend und nahezu spielfrei in die Aufnahmeöffnung 28 eingesetzt werden kann. Oberhalb des Verbindungsbereichs 26 weist die Werkzeughaltevorrichtung 22 einen Werkzeugaufnahmebereich 32 mit einer Werkzeugaufnahmeöffnung 34 auf, die so ausgeführt ist, dass das Werkzeug 24 nahezu spielfrei eingesetzt werden kann. Das Werkzeug 24 kann hierbei so weit in die Werkzeugaufnahmeöffnung 34 eingedrückt werden, bis es mit seinem Schaftende am Boden der Werkzeugaufnahmeöffnung 34 anliegt. Der Werkzeugaufnahmebereich 32 ist bei im Verbindungsbereich 26 angeordnetem Werkzeugfutter 20 zur mit der Aufnahmeöffnung 28 des Werkzeugfutters 20 fluchtenden Halterung des Werkzeugs 24 vorgesehen.

Nach dem Einsetzen des Werkzeugs 24 in die Werkzeughaltevorrichtung 22 wird ein dem Werkzeug 24 zugeordneter Datensatz in die Auswerteeinheit 16 geladen. Der Auswerteeinheit 16 ist zu diesem Zeitpunkt bekannt, um was für ein Werkzeug 24 es sich handelt und auf welche Soll-Position Zₛₒₗₗ es im Werkzeugfutter 20 positioniert und anschließend eingeschrumpft werden soll. Nun wird ein Messablauf mit Hilfe der Steuereinheit 8 von einem Bediener gestartet, wodurch die Vermessungsoptik 6 mit ihrem Blickfeld 36 auf einen vorbestimmten Punkt fokussiert wird. Der Punkt liegt beispielsweise in einer vorgegebenen Höhe über einem Bezugspunkt des Werkzeugfutters 20 und auf einer Sichtkante eines zylinderförmigen Schafts 38 des Werkzeugs 24. Im Blickfeld 36 der Vermessungsoptik 6 ist das Werkzeug 24 sichtbar. Diese Sichtbarkeit wird von der Auswerteeinheit 16 registriert und die Vermessungsoptik 6 wird so verfahren, dass das Blickfeld 36 in Axialrichtung 40 vom Werkzeugfutter 20 entfernt - also nach oben verfahren - wird. Schließlich erscheint ein charakteristisches Element 42 des Werkzeugs 24, beispielsweise eine Schneidenkante, im Blickfeld 36, wodurch das charakteristische Element 42 optisch abgetastet wird. Das charakteristische Element 42 wird von der Auswerteeinheit 16 erkannt, die Bewegung der Vermessungsoptik 6 wird gestoppt, und die Ist-Postion Zᵢₛₜ des charakteristischen Elements 42 bestimmt. Die Ist-Position Zᵢₛₜ bezieht sich hierbei auf die Lage des charakteristischen Elements 42 relativ zu einem festen Bezugspunkt auf dem Werkzeugfutter 20. Es ist ebenso gut möglich, ein Blickfeld 36a der Vermessungsoptik 6 auf einen vorbestimmten Punkt zu richten, der oberhalb des Werkzeugs 24 liegt, so dass das Werkzeug 24 im Blickfeld 36a fehlt. In diesem Fall wird von der Auswerteeinheit 16 eine Bewegung der Vermessungsoptik 6 in Axialrichtung 40 nach unten gestartet und die Vermessungsoptik 6 an das Werkzeugfutter 20 angenähert, so lange, bis das charakteristische Element 42 im Blickfeld 36a der Vermessungsoptik 6 erscheint.

Nach Abschluss der Bestimmung der Ist-Position Zᵢₛₜ des charakteristischen Elements 42 wird das Positioniermittel 18 in Form eines stangenartigen Stößels von einem nicht gezeigten Antrieb aus einer Ruheposition nach oben verfahren. Das Positioniermittel 18 wird hierbei mit einem oberen Anschlag 46 durch eine Positionieröffnung 48 im Verbindungsbereich 26 der Werkzeughaltevorrichtung 22 hindurch geführt, und zwar so lange, bis der Anschlag 46 an den Schaft des Werkzeugs 24 anstößt. Durch dieses Anlegen des Positioniermittels 18 an das Werkzeug 24 wird das Werkzeug 24 leicht angehoben, beispielsweise um einige Hundertstel Millimeter bis wenige Millimeter.

Während des Hochfahrens des Positioniermittels 18 wird das charakteristische Element 42 durch die Vermessungsoptik 6 abgetastet und das im Blickfeld 36, 36a erscheinende Bild des charakteristischen Elements 42 wird von der Auswerteeinheit 16 regelmäßig auf eine Bewegung hin untersucht. Die Bewegung des charakteristischen Elements 42, beispielsweise um einige Zehntelmillimeter, verursacht durch das Anstoßen des Anschlags 46 an den Werkzeugschaft, wird mit Hilfe der Vermessungsoptik 6 von der Auswerteeinheit 16 erfasst und als Trigger zum Stoppen der Bewegung des Positioniermittels 18 verwendet. Anschließend ruht das Werkzeug 24, vom Werkzeugaufnahmebereich 32 gehalten, auf dem Positioniermittel 18.

Nun wird das charakteristische Element 42 erneut auf seine Ist-Position Zᵢₛₜ hin vermessen, und in Verbindung mit der hinterlegten Soll-Position Zₛₒₗₗ des charakteristischen Elements 42 wird eine Soll-Position des Positioniermittels 18 oder ein Verfahrweg Z_{Δ} in diese Soll-Position bestimmt. Um diesen Verfahrweg Z_{Δ} wird nun das Positioniermittel 18 nach unten verfahren und dort in einer Wartestellung gehalten.

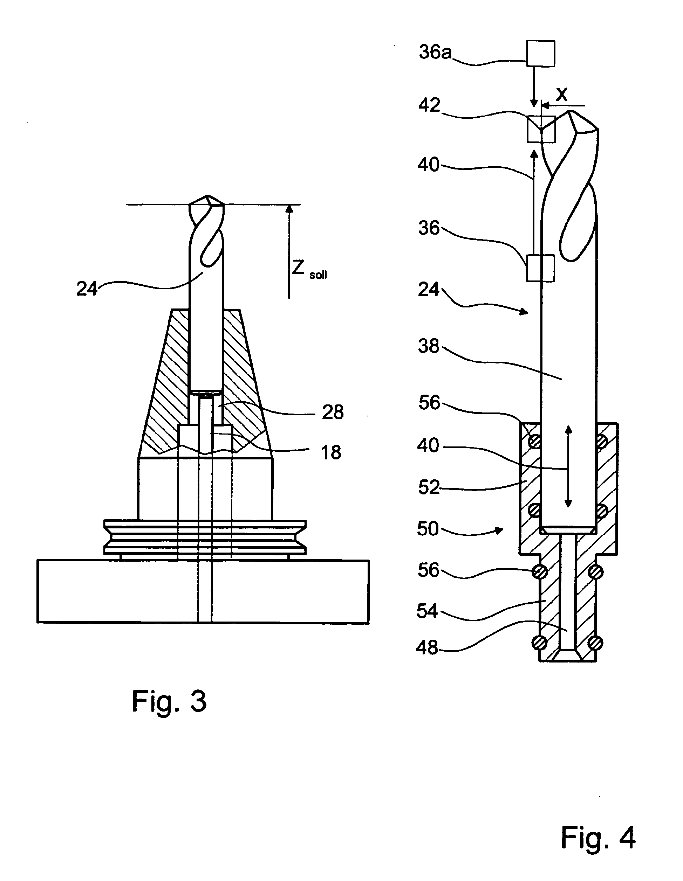

Im Anschluss daran kann das Werkzeug 24 aus der Werkzeughaltevorrichtung 22 entnommen und die Werkzeughaltevorrichtung 22 aus dem Werkzeugfutter 20 entnommen und durch manuelles oder automatisches Einfahren der Induktionsspule 12 das Erhitzen des Aufnahmebereichs 30 des Werkzeugfutters 20 und damit der Einschrumpfvorgang des Werkzeugs 24 gestartet werden. Nach ausreichender Erhitzung des Aufnahmebereichs 30 wird das Werkzeug 24 von einem Bediener oder automatisch durch einen Roboter in die Aufnahmeöffnung 28 des Werkzeugfutters 20 eingesetzt, wobei es auf das bereits vorpositionierte Positioniermittel 18 gegeben wird (Figur 3). Das charakteristische Element 42 befindet sich nun in der gewünschten Soll-Position Zₛₒₗₗ. Dann wird das eingeschrumpfte Komplettwerkzeug aus Werkzeugfutter 20 und Werkzeug 24 mit Luft, Kühladaptern oder wasserdurchspülten Kühlglocken gekühlt. Der Einschrumpfvorgang ist beendet, und das Werkzeug 24 kann im abgekühlten Zustand nachgemessen werden. Das Positioniermittel 18 kann in einen Ausgangszustand zurückgefahren werden.

Vorzugsweise kann an mehrschneidigen Werkzeugen zuerst die größte aller Schneiden gesucht und diese dann für das Messen und Einstellen verwendet werden. Ein weiterer Vorteil ist, dass die Länge der Werkzeughaltevorrichtung 22 so ausgeführt werden kann, dass sowohl die Schaftlänge des Werkzeugs 24 selbst wie auch die Einstecktiefe ins Werkzeugfutter 20 auf optimale Länge ausgelegt werden kann. Somit wird ein Taumelfehler beim Messen weitgehend vermieden. Aufgrund der einfachen und preiswerten Ausführung kann man prinzipiell auch für Sonderwerkzeuge oder für unterschiedliche Schafttoleranzen einzelne Werkzeughaltevorrichtungen 22 für ein und denselben Werkzeugtyp (Schaftdurchmesser) bereitstellen.

Zur zumindest teilweisen Korrektur eines eventuell vorhandenen Taumels des Werkzeugs 24 in der Werkzeughaltevorrichtung 22 ist es zusätzlich möglich, die Außenkontur des Werkzeugs 24 in vier Punkten P₁, P₂, P₃ und P₄ zu bestimmen, beispielsweise mit Hilfe der Vermessungsoptik 6, und daraus die theoretische Mittelachse des Werkzeugs 24 zu ermitteln. Diese Mittelachse ist die Verbindungsgerade von einem ersten errechneten Mittelpunkt, der zwischen den Punkten P₁ und P₂ liegt, zu einem zweiten errechneten Mittelpunkt, der zwischen den Punkten P₃ und P₄ liegt. Diese theoretische Mittelachse kann in die Ermittlung der Position des charakteristischen Elements 42 einfließen. Eine solche Bestimmung der theoretischen Mittelachse ist besonders bei geradgenuteten Werkzeugen und bei Werkzeugen sinnvoll, bei denen eine Außenkontur des Schafts wie oben beschrieben vermessen werden kann.

Eine alternative Werkzeughaltevorrichtung 50 ist in Figur 4 gezeigt. Sowohl im Werkzeugaufnahmebereich 52 als auch im Verbindungsbereich 54 ist ein Halteelement 56 in Form von O-Ringen angeordnet, die für eine spielfreie Halterung des Werkzeugs 24 im Werkzeugaufnahmebereich 52 beziehungsweise des Verbindungsbereichs 54 in der Aufnahmeöffnung 28 des Werkzeugfutters 20 sorgen. Die O-Ringe sind jeweils in ringförmige Nuten der Werkzeughaltevorrichtung 50 eingesetzt und werden von diesen in Position gehalten. Das Halteelement 56 ist aus einem elastischen Material gefertigt und kann beispielsweise durch das eingeführte Werkzeug 24 in der Weise zusammengedrückt werden, dass das Werkzeug 24 mit seinem Schaft in den Werkzeugaufnahmebereich 52 eingesetzt werden kann und von den O-Ringen elastisch gehalten wird. In analoger Weise hält das Halteelement 56 im Verbindungsbereich 54 die Werkzeughaltevorrichtung 50 spielfrei und elastisch in der Aufnahmeöffnung 28.

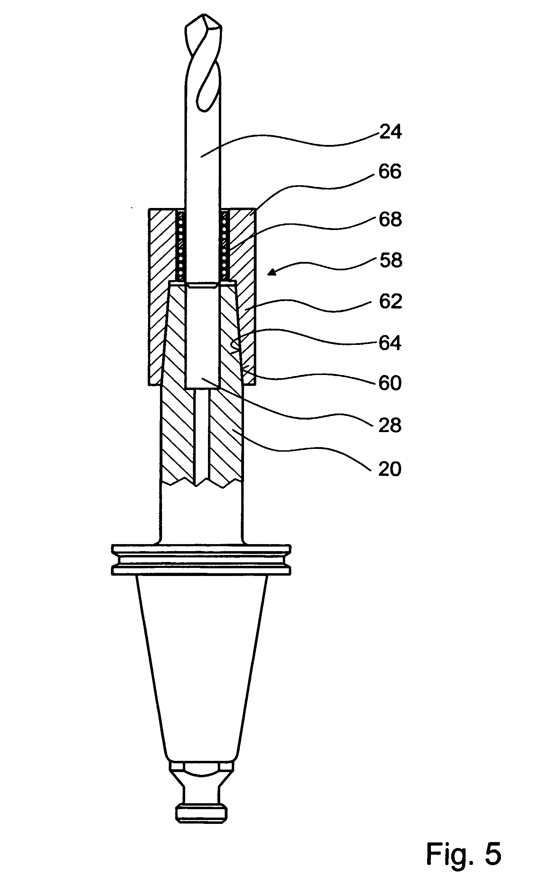

Eine weitere Werkzeughaltevorrichtung 58 ist in Figur 5 gezeigt. Diese Werkzeughaltevorrichtung 58 wird nicht in die Aufnahmeöffnung 28 des Werkzeugfutters 20 eingesteckt, sondern auf eine konische Außenwand 60 des Werkzeugfutters 20 aufgesetzt. Hierzu weist die Werkzeughaltevorrichtung 58 in ihrem Verbindungsbereich 62 eine konisch geformte Innenwand 64 auf, die zur Anordnung um die Außenwand 60 des Werkzeugfutters 20 vorgesehen ist.

Die Außenwand 60 und die Innenwand 64 sind jeweils geschliffen und zueinander passgenau ausgeführt, so dass die Werkzeughaltevorrichtung 58 spielfrei und mit nur geringer Verkippungsgefahr auf dem Werkzeugfutter 20 aufsitzt. Hierbei ist ein Werkzeugaufnahmebereich 66 der Werkzeughaltevorrichtung 58 so ausgeführt, dass das in ihm gehaltene Werkzeug 24 fluchtend mit der Aufnahmeöffnung 28 ausgerichtet ist.

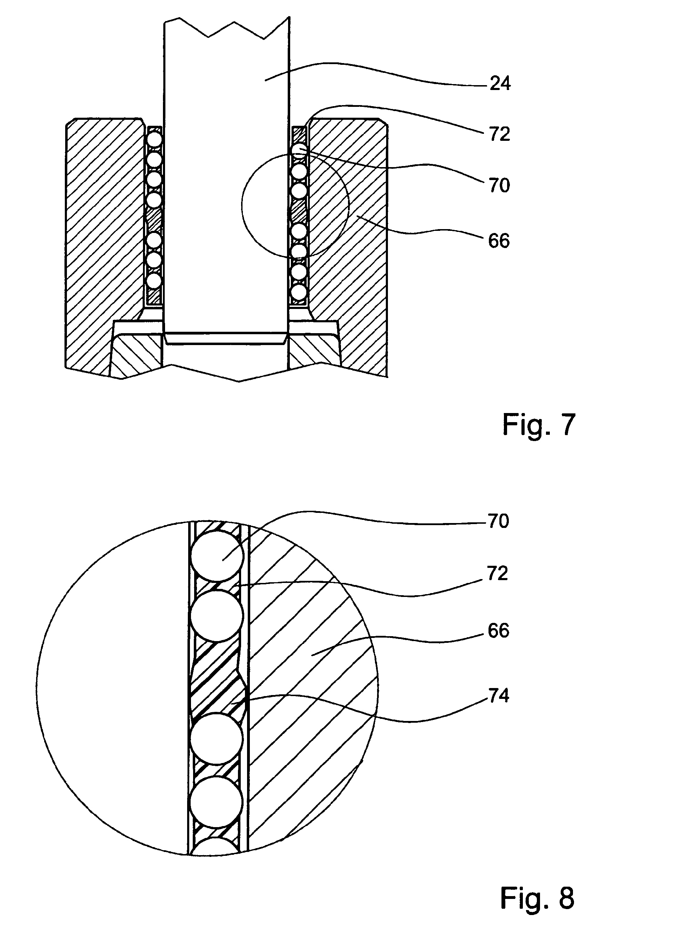

Im Werkzeugaufnahmebereich 66 der Werkzeughaltevorrichtung 58 ist ein Halteelement 68 in Form eines Kugelkäfigs angeordnet, der in Figur 7 detaillierter dargestellt ist. Das Halteelement 68 weist kreisförmig um das Werkzeug 24 herum angeordnete Reihen von Wälzkörpern 70 in Form von Kugeln auf, wobei in Tangentialrichtung benachbarte Wälzkörper 70 jeweils um etwas mehr als einen Kugelradius in Axialrichtung 40 versetzt angeordnet sind. Die Wälzkörper 70 sind aus Stahl gefertigt und weisen eine geringe, aber ausreichende Elastizität auf, um das Werkzeug 24 elastisch und spielfrei im Werkzeugaufnahmebereich 66 zu halten. Bei im Werkzeugaufnahmebereich 66 eingesetztem Werkzeug 24 sind die Wälzkörper 70 zwischen 2 µm und 3 µm elastisch zusammengedrückt.

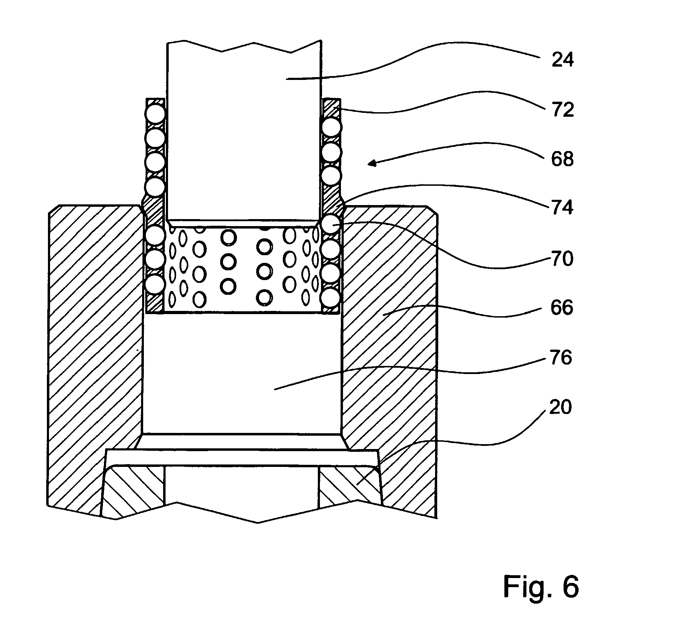

Zum Einsetzen des Werkzeugs 24 in den Werkzeugaufnahmebereich 66 der Werkzeughaltevorrichtung 58 wird zuerst das Halteelement 68 bis zu einem Anschlag 74 (Figur 6) in eine Werkzeugaufnahmeöffnung 76 des Werkzeugaufnahmebereichs 66, also bis etwa zur Hälfte, eingedrückt. Anschließend wird das Werkzeug 24 mit seinem Schaft in das Halteelement 68 eingeführt, wobei die aus der Werkzeugaufnahmeöffnung 76 herausragenden Wälzkörper 70 in einem elastischen, die Wälzkörper 70 zusammenhaltenden Verbindungsmittel 72 leicht nach außen gedrückt werden.

Bei weiterem Eindrücken des Werkzeugschafts in das Halteelement 68 werden die in der Werkzeugaufnahmeöffnung 76 obersten Wälzkörper 70 vom Schaft gegen die Innenwand der Werkzeugaufnahmeöffnung 76 gedrückt und bei weiterer Bewegung des Schafts nach unten zum Rollen an der Innenwand gezwungen. Hierdurch wird das Verbindungsmittel 72 nach unten und in die Werkzeugaufnahmeöffnung 76 hineingezogen, wobei der ringförmige Anschlag 74 radial nach innen gedrückt wird. Zur Ermöglichung dieses Eindrückens des Anschlags 74 ist das Verbindungsmittel 72 aus einem elastischen Kunststoff gefertigt (Figur 8).

Nun kann das Werkzeug 24 bis zum Werkzeugfutter 20 heruntergedrückt werden, wobei das Halteelement 68 mit der halben Bewegungsgeschwindigkeit des Werkzeugs 24 in die Werkzeugaufnahmeöffnung 76 hineingeführt wird. Durch die in Axialrichtung 40 mittige Anordnung des Anschlags 74 ist das Halteelement 68 bei vollständig in der Werkzeugaufnahmeöffnung 76 eingeführtem Werkzeugschaft ebenfalls vollständig innerhalb der Werkzeugaufnahmeöffnung 76 angeordnet und hält das Werkzeug 24 in Axialrichtung 40 und Tangentialrichtung beweglich und in Radialrichtung unbeweglich, ein Verkippen wird somit verhindert.

### Bezugszeichen

- 2: Einstell- und Messgerät
- 4: Optikträger
- 6: Vermessungsoptik
- 8: Steuereinheit
- 10: Induktionsschlitten
- 12: Induktionsspule
- 14: Werkzeugaufnahmespindel
- 16: Auswerteeinheit
- 18: Positioniermittel
- 20: Werkzeugfutter
- 22: Werkzeughaltevorrichtung
- 24: Werkzeug
- 26: Verbindungsbereich
- 28: Aufnahmeöffnung
- 30: Aufnahmebereich
- 32: Werkzeugaufnahmebereich
- 34: Werkzeugaufnahmeöffnung
- 36: Blickfeld
- 36a: Blickfeld
- 38: Schaft
- 40: Axialrichtung
- 42: charakteristisches Element
- 46: Anschlag
- 48: Positionieröffnung
- 50: Werkzeughaltevorrichtung
- 52: Werkzeugaufnahmebereich
- 54: Verbindungsbereich
- 56: Halteelement
- 58: Werkzeughaltevorrichtung
- 60: Außenwand
- 62: Verbindungsbereich
- 64: Innenwand
- 66: Werkzeugaufnahmebereich
- 68: Halteelement
- 70: Wälzkörper
- 72: Verbindungsmittel
- 74: Anschlag
- 76: Werkzeugaufnahmeöffnung
- Zᵢₛₜ: Ist-Position
- Zₛₒₗₗ: Soll-Position
- Z_{Δ}: Verfahrweg

## Patentansprüche

1. Vorrichtung mit einem Werkzeug (24), mit einem Werkzeugfutter (20) und mit einer Werkzeughaltevorrichtung (22, 50, 58) zum Halten des Werkzeugs (24) an dem Werkzeugfutter (20) vor einem Erhitzen eines Aufnahmebereichs (30) des Werkzeugfutters (20) und vor einem Einschrumpfvorgang des Werkzeugs (24) in das Werkzeugfutter (20), mit einem Werkzeugaufnahmebereich (32, 52, 66) zur zumindest teilweisen Aufnahme des Werkzeugs (24), einem Verbindungsbereich (26, 54, 62) zur Anordnung am Werkzeugfutter (20) und mit einer Positionieröffnung (48), durch die ein Positioniermittel (18) an das zumindest teilweise im Werkzeugaufnahmebereich (32, 52, 66) angeordnete Werkzeug (24) anlegbar ist.

2. Werkzeughaltevorrichtung (22, 50, 58) nach Anspruch 1,
**dadurch gekennzeichnet, dass** der Werkzeugaufnahmebereich (32, 52, 66) bei im Verbindungsbereich (26, 54, 62) angeordnetem Werkzeugfutter (20) zur mit einer Aufnahmeöffnung (28) des Werkzeugfutters (20) fluchtenden Halterung des Werkzeugs (24) vorgesehen ist.

3. Werkzeughaltevorrichtung (22, 50) nach Anspruch 1 oder 2,
**dadurch gekennzeichnet, dass** der Verbindungsbereich (26, 54) einen Schaft zur Anordnung in einer Aufnahmeöffnung (28) des Werkzeugfutters (20) aufweist.

4. Werkzeughaltevorrichtung (50, 58) nach einem der vorhergehenden Ansprüche,
**dadurch gekennzeichnet, dass** im Verbindungsbereich (54, 62) und/oder im Werkzeugaufnahmebereich (52, 66) ein zur elastischen Verformung vorgesehenes Halteelement (56, 68) angeordnet ist.

5. Werkzeughaltevorrichtung (50) nach Anspruch 4,
**dadurch gekennzeichnet, dass** das Halteelement (56) einen O-Ring umfasst.

6. Werkzeughaltevorrichtung (58) nach einem der vorhergehenden Ansprüche,
**dadurch gekennzeichnet, dass** im Verbindungsbereich (62) und/oder im Werkzeugaufnahmebereich (66) ein beweglich gelagertes Halteelement (68) angeordnet ist.

7. Werkzeughaltevorrichtung (58) nach Anspruch 4 oder 6, **dadurch gekennzeichnet, dass** das Halteelement (68) ein Wälzkörperkäfig ist.

8. Werkzeughaltevorrichtung (58) nach einem der vorhergehenden Ansprüche,
**dadurch gekennzeichnet, dass** der Verbindungsbereich (62) eine Innenwand (64) zur Anordnung um eine Außenwand (60) des Werkzeugfutters (20) aufweist.

9. Werkzeughaltevorrichtung (50) nach Anspruch 8,
**dadurch gekennzeichnet, dass** die Innenwand (64) konisch ist.

10. Verfahren zum Positionieren eines Werkzeugs (24) in einem Werkzeugfutter (20), bei dem eine Werkzeughaltevorrichtung (22, 50, 58) am Werkzeugfutter (20) vor einem Erhitzen eines Aufnahmebereichs (30) des Werkzeugfutters (20) und vor einem Einschrumpfvorgang des Werkzeugs (24) in das Werkzeugfutter (20) angeordnet und das Werkzeug (24) von der Werkzeughaltevorrichtung (22, 50, 58) gehalten wird, ein charakteristisches Element (42) des Werkzeugs (24) zur Positionierung eines Positioniermittels (18) abgetastet wird, wobei mit Hilfe des Positioniermittels (18) eine Kraft durch eine Positionieröffnung (48) in der Werkzeughaltevorrichtung (22, 50, 58) hindurch auf das Werkzeug (24) aufgebracht wird und im Anschluss daran das Werkzeug (24) aus der Werkzeughaltevorrichtung (22) entnommen wird und die Werkzeughaltevorrichtung (22) aus dem Werkzeugfutter (20) entnommen wird und durch manuelles oder automatisches Einfahren einer Induktionsspule (12) das Erhitzen des Aufnahmebereichs (30) des werkzeugfutters (20) und damit der Einschrumpfvorgang des Werkzeugs (24) gestartet wird.

11. Verfahren nach Anspruch 10,
**dadurch gekennzeichnet, dass** die Kraft auf das Werkzeug (24) während des Vermessens des charakteristischen Elements (42) aufrechterhalten bleibt.

12. Verfahren nach Anspruch 10 oder 11,
**dadurch gekennzeichnet, dass** das Positioniermittel (18) vor dem Vermessen des charakteristischen Elements (42) an das Werkzeug (24) angelegt und das Werkzeug (24) beim Anlegen abgetastet wird.

13. Verfahren nach Anspruch 12,
**dadurch gekennzeichnet, dass** durch das Anlegen eine Bewegung des Werkzeugs (24) bewirkt und die Bewegung als Trigger zum Stoppen der Bewegung des Positioniermittels (18) verwendet wird.

14. Verfahren nach einem der Ansprüche 10 bis 13,
**dadurch gekennzeichnet, dass** das Werkzeug (24) vor dem Vermessen des charakteristischen Elements (42) durch das Positioniermittel (18) in der Werkzeughaltevorrichtung (22, 50, 58) angehoben wird und während des Vermessens angehoben bleibt.

15. Verfahren nach einem der Ansprüche 10 bis 14,
**dadurch gekennzeichnet, dass** eine Vermessungsoptik (6) auf einen vorbestimmten Punkt fokussiert wird, die Vermessungsoptik (6) bei fehlendem oder sichtbarem Werkzeug (24) im Blickfeld (36, 36a) der Vermessungsoptik (6) in Axialrichtung (40) eines Werkzeugaufnahmebereichs (32, 52, 66) der Werkzeughaltevorrichtung (22, 50, 58) an das Werkzeugfutter (20) angenähert bzw. vom Werkzeugfutter (20) entfernt wird und nach Erscheinen des charakteristischen Elements (42) im Blickfeld (36, 36a) dessen Ist-Position (Zᵢₛₜ) bestimmt und danach die Kraft auf das Werkzeug (24) aufgebracht wird.

16. Verfahren nach Anspruch 15,
**dadurch ge**k**ennze**i**chnet**, **dass** nach dem Aufbringen der Kraft die Ist-Position (Zᵢₛₜ) zur Bestimmung der Soll-Position des Positioniermittels (18) erneut gemessen wird.

## Claims

1. Device with a tool (24), with a tool chuck (20) and with a tool-holding device (22, 50, 58) for holding the tool (24) on a tool chuck (20) prior to heating of a locating region (30) of the tool chuck (20) and prior to shrink-fitting of the tool (24) in the tool chuck (20), having a tool-locating region (32, 52, 66) for at least partly locating the tool (24), a connecting region (26, 54, 62) for arranging on the tool chuck (20), and a positioning opening (48), through which a positioning means (18) can be placed against the tool (24) arranged at least partly in the tool-locating region (32, 52, 66).

2. Tool-holding device (22, 50, 58) according to Claim 1, **characterized in that** the tool-locating region (32, 52, 66), when the tool chuck (20) is arranged in the connecting region (26, 54, 62), is intended for holding the tool (24) in alignment with a locating opening (28) of the tool chuck (20).

3. Tool-holding device (22, 50) according to Claim 1 or 2, **characterized in that** the connecting region (26, 54) has a shank for arranging in a locating opening (28) of the tool chuck (20).

4. Tool-holding device (50, 58) according to one of the preceding claims, **characterized in that** a holding element (56, 68) provided for the elastic deformation is arranged in the connecting region (54, 62) and/or in the tool-locating region (52, 66).

5. Tool-holding device (50) according to Claim 4, **characterized in that** the holding element (56) comprises an 0-ring.

6. Tool-holding device (58) according to one of the preceding claims, **characterized in that** a movably mounted holding element (68) is arranged in the connecting region (62) and/or in the tool-locating region (66).

7. Tool-holding device (58) according to Claim 4 or 6, **characterized in that** the holding element (68) is a rolling-element cage.

8. Tool-holding device (58) according to one of the preceding claims, **characterized in that** the connecting region (62) has an inner wall (64) for arranging around an outer wall (60) of the tool chuck (20).

9. Tool-holding device (50) according to Claim 8, **characterized in that** the inner wall (64) is tapered.

10. Method of positioning a tool (24) in a tool chuck (20), in which a tool-holding device (22, 50, 58) is arranged on the tool chuck (20), prior to heating of a locating region (30) of the tool chuck (20) and prior to shrink-fitting of the tool (24) in the tool chuck (20) and the tool (24) is held by the tool-holding device (22, 50, 58), and a characteristic element (42) of the tool (24) is scanned for positioning a positioning means (18), a force being applied to the tool (24) by the positioning means (18) through a positioning opening (48) in the tool-holding device (22, 50, 58), and the tool (24) subsequently being removed from the tool-holding device (22) and the tool-holding device (22) being removed from the tool chuck (20) and heating of the locating region (30) of the tool chuck (20) and hence the shrink-fitting of the tool (24) being started by manually or automatically moving an induction coil (12) into position.

11. Method according to Claim 10, **characterized in that** the force on the tool (24) is maintained during the measuring of the characteristic element (42).

12. Method according to Claim 10 or 11, **characterized in that** the positioning means (18) is placed against the tool (24) before the measuring of the characteristic element (42), and the tool (24) is scanned when said positioning means (18) is placed against it.

13. Method according to Claim 12, **characterized in that** the placing of the positioning means (18) against the tool (24) causes the tool (24) to move, and the movement is used as a trigger for stopping the movement of the positioning means (18).

14. Method according to one of Claims 10 to 13, **characterized in that** the tool (24) is lifted in the tool-holding device (22, 50, 58) by the positioning means (18) before the measuring of the characteristic element (42) and remains lifted during the measuring.

15. Method according to one of Claims 10 to 14, **characterized in that** an optical measuring system (6) is focussed on a predetermined point, the optical measuring system (6), if the tool (24) is absent or visible in the field of view (36, 36a) of the optical measuring system (6), is brought closer to or respectively moved away from the tool chuck (20) in the axial direction (40) of a tool-locating region (32, 52, 66) of the tool-holding device (22, 50, 58), and, after the characteristic element (42) appears in the field of view (36, 36a), its actual position (Zᵢₛₜ) is determined and the force is then applied to the tool (24).

16. Method according to Claim 15, **characterized in that**, after the application of the force, the actual position (Zᵢₛₜ) is measured again for determining the desired position of the positioning means (18).

## Revendications

1. Dispositif doté d'un outil (24), d'un mandrin (20) à outil et d'un dispositif (22, 50, 58) qui maintient l'outil (24) dans le mandrin (20) à outil avant un échauffement d'une zone (30) de réception d'outil du mandrin (20) d'outil et avant une fixation de l'outil (24) dans le mandrin (20) d'outil par un processus de rétrécissement, ledit dispositif présentant une zone (32, 52, 66) de réception d'outil qui reçoit au moins une partie de l'outil (24), une zone de liaison (26, 54, 62) destinée à être placée sur le mandrin (20) à outil et une ouverture de positionnement (48) par laquelle un moyen de positionnement (18) peut être placé sur l'outil (24) disposé au moins en partie dans la zone (32, 52, 66) de réception d'outil.

2. Dispositif (22, 50, 58) de maintien d'outil selon la revendication 1, **caractérisé en ce que** la zone (32, 52, 66) de réception d'outil est prévue pour maintenir l'outil (24) aligné sur une ouverture de réception (28) du mandrin (20) à outil lorsque le mandrin (20) à outil est disposé dans la zone de liaison (26, 54, 62).

3. Dispositif (22, 50) de maintien d'outil selon les revendications 1 ou 2, **caractérisé en ce que** la zone de liaison (26, 54) présente une tige destinée à être disposée dans une ouverture de réception (28) du mandrin (20) à outil.

4. Dispositif (50, 58) de maintien d'outil selon l'une des revendications précédentes, **caractérisé en ce qu'**un élément de maintien (56, 68) prévu pour se déformer élastiquement est disposé dans la zone de liaison (54, 62) et/ou dans la zone (52, 66) de réception d'outil.

5. Dispositif (50) de maintien d'outil selon la revendication 4, **caractérisé en ce que** l'élément de maintien (56) présente un joint torique.

6. Dispositif (58) de maintien d'outil selon l'une des revendications précédentes, **caractérisé en ce qu'**un élément de maintien (68) monté à déplacement est disposé dans la zone de liaison (62) et/ou dans la zone (66) de réception d'outil.

7. Dispositif (58) de maintien d'outil selon les revendications 4 ou 6, **caractérisé en ce que** l'élément de maintien (68) est une cage pour corps de roulement.

8. Dispositif (58) de maintien d'outil selon l'une des revendications précédentes, **caractérisé en ce que** la zone de liaison (62) présente une paroi intérieure (64) destinée à être placée autour d'une paroi extérieure (60) du mandrin (20) à outil.

9. Dispositif (50) de maintien d'outil selon la revendication 8, **caractérisé en ce que** la paroi intérieure (64) est conique.

10. Procédé de positionnement d'un outil (24) dans un mandrin (20) à outil, dans lequel un dispositif (22, 50, 58) de maintien d'outil est disposé sur le mandrin (20) à outil avant un échauffement d'une zone (30) de réception d'outil du mandrin (20) d'outil et avant une fixation de l'outil (24) dans le mandrin (20) d'outil par un processus de rétrécissement, l'outil (24) étant maintenu par le dispositif (22, 50, 58) de maintien d'outil, un élément caractéristique (42) de l'outil (24) étant relevé pour positionner un moyen de positionnement (18), le moyen de positionnement (18) appliquant sur l'outil (24) une force à travers une ouverture de positionnement (48) ménagée dans le dispositif (22, 50, 58) de maintien d'outil, l'outil (24) étant ensuite retiré du dispositif (22) de maintien d'outil et le dispositif (22) de maintien d'outil étant retiré du mandrin (20) à outil et le chauffage de la zone de réception (30) du mandrin (20) à outil et donc le processus de fixation de l'outil (24) par rétré-cissement étant lancés en insérant manuellement ou automatiquement une bobine d'induction (12).

11. Procédé selon la revendication 10, **caractérisé en ce que** la force appliquée sur l'outil (24) est maintenue pendant la mesure de l'élément caractéristique (42).

12. Procédé selon les revendications 10 ou 11, **caractérisé en ce que** le moyen de positionnement (18) est placé sur l'outil (24) avant la mesure de l'élément caractéristique (42), l'outil (24) étant examiné lors du placement.

13. Procédé selon la revendication 12, **caractérisé en ce que** le placement du moyen de positionnement (18) entraîne un déplacement de l'outil (24), le déplacement étant utilisé comme déclencheur d'arrêt du déplacement du moyen de positionnement (18).

14. Procédé selon l'une des revendications 10 à 13, **caractérisé en ce qu'**avant la mesure de l'élément caractéristique (42), l'outil (24) est relevé dans le dispositif (22, 50, 58) de maintien d'outil par le moyen de positionnement (18) et est maintenu relevé pendant la mesure.

15. Procédé selon l'une des revendications 10 à 14, **caractérisé en ce qu'**une optique de mesure (6) est focalisée sur un point prédéterminé, **en ce qu'**en cas d'absence d'un outil (24) dans le champ de vision (36, 36a) de l'optique de mesure (6), l'optique de mesure (6) est approchée du mandrin (20) à outil dans la direction axiale (40) d'une zone (32, 52, 66) de réception d'outil du dispositif (22, 50, 58) de maintien d'outil, **en ce que**, lorsque l'outil (24) est visible dans le champ de vision (36, 36a), l'optique de mesure (6) est enlevée du mandrin (20) à outil dans la direction axiale (40) d'une zone (32, 52, 66) de réception d'outil du dispositif (22, 50, 58) de maintien d'outil, la position effective (Zᵢₛₜ) de l'élément caractéristique (42) étant déterminée lors de son apparition dans le champ de vision (36, 36a), la force étant ensuite appliquée sur l'outil (24).

16. Procédé selon la revendication 15, **caractérisé en ce qu'**après l'application de la force, la position effective (Zᵢₛₜ) est mesurée à nouveau pour déterminer la position de consigne du moyen de positionnement (18).
